(19) Europäisches Patentamt
European Patent Office
Office européen des brevets

(11) **EP 4 644 867 A1**

(12) **EUROPEAN PATENT APPLICATION**
published in accordance with Art. 153(4) EPC

(43) Date of publication:
**05.11.2025 Bulletin 2025/45**

(21) Application number: **23910939.0**

(22) Date of filing: **29.12.2023**

(51) International Patent Classification (IPC):
*G01N 21/27* (2006.01)     *G01M 11/02* (2006.01)

(86) International application number:
**PCT/CN2023/143276**

(87) International publication number:
**WO 2024/141025 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.12.2022 CN 202211714481**

(71) Applicants:
• Suzhou Opple Lighting Co., Ltd.
  Suzhou, Jiangsu 215211 (CN)
• Opple Lighting Co,. Ltd.
  Shanghai 201201 (CN)

(72) Inventors:
• ZHANG, Yong
  Suzhou, Jiangsu 215211 (CN)
• LI, Qi
  Suzhou, Jiangsu 215211 (CN)
• HUI, Chengqi
  Suzhou, Jiangsu 215211 (CN)

(74) Representative: **Winter, Brandl - Partnerschaft mbB**
**Alois-Steinecker-Straße 22**
**85354 Freising (DE)**

(54) **SPECTRAL DATA CALIBRATION METHOD AND APPARATUS, AND ELECTRONIC DEVICE AND STORAGE MEDIUM**

(57) The present application relates to the technical field of spectral data calibration. Provided are a spectral data calibration method and apparatus, and an electronic device and a storage medium. The spectral data calibration method comprises : acquiring a conversion coefficient of a measurement fixture according to a tristimulus value acquired by means of a spectrometer and a reading value acquired by means of the measurement fixture; acquiring a model conversion coefficient according to the reading value, which is acquired by means of the measurement fixture, and a peak response normalization curve corresponding to each channel of the measurement fixture; and calibrating at least one of first spectral data and second spectral data, which are measured by the measurement fixture, wherein first calibrated spectral data is acquired according to the conversion coefficient of the measurement fixture, and second calibrated spectral data is acquired according to the conversion coefficient of the measurement fixture and the model conversion coefficient.

obtaining the conversion coefficient of the measurement jig based on the tristimulus values obtained by a spectrometer and the reading values obtained by the measurement jig — 101

obtaining the model conversion coefficient based on the reading values obtained by the measurement jig and the normalized peak response curves corresponding to respective channels of the measurement jig — 102

Calibrating at least one of the first spectral data and the second spectral data measured by the measurement jig, and correspondingly obtaining at least one of a first calibrated spectral data and a second calibrated spectral data; the first calibrated spectral data is obtained based on a conversion coefficient of the measurement jig; the second calibrated spectral data is obtained based on the conversion coefficient of the measurement jig and the model conversion coefficient — 103

FIG. 1

EP 4 644 867 A1

**Description**

CROSS REFERENCE TO RELATED APPLICATIONS

This application claims priority to Chinese Patent Application No. 2022117144813, filed on December 29, 2022, entitled "spectral data calibration method and apparatus, and electronic device and storage medium", which is incorporated herein by reference in its entirety.

TECHNICAL FIELD

The present application relates to the technical field of spectral data calibration, and in particular to a spectral data calibration method and apparatus, an electronic device and a storage medium.

BACKGROUND

Led lighting has been the mainstream lighting method in current lighting field, for the emerging fields of smart lighting and healthy lighting, intelligent perception of the lighting environment is very important. The perception of the lighting environment is realized through sensors, which make smart lighting and healthy lighting more convenient and make people's lives more colorful. Since there are differences in respective light sensor chips, the spectral data obtained by respective sensors may be different, resulting in inaccurate calculated light source indicators. In addition, some complex light source indicator parameters (such as color rendering index) require spectrometer with complex measurement principles for the measurement, but such a spectrometer is expensive, and the measurement process is inconvenient, and the spectrometer is large, so it is not suitable for large-scale application in smart lighting.

SUMMARY

This application provides a spectral data calibration method and apparatus, an electronic device and a storage medium, which are used for solving the problem that the spectral data obtained by traditional color sensors is inaccurate and traditional color sensors cannot measure complex light source parameters, while spectrometers that can measure complex light source parameters are expensive and have the defect of being unsuitable for large-scale applications in smart lighting.

In order to solve the above technical problems, the technical solution of this application provides a spectral data calibration method, including:

obtaining a conversion coefficient of a measurement jig based on a tristimulus value obtained by a spectrometer and a reading value obtained by the measurement jig;

obtaining a model conversion coefficient based on the reading value obtained by the measurement jig and a normalized peak response curve corresponding to each channel of the measurement jig;

calibrating at least one of a first spectral data and a second spectral data measured by the measurement jig, and correspondingly obtaining at least one of a first calibrated spectral data and a second calibrated spectral data; wherein the first calibrated spectral data is obtained according to the conversion coefficient of the measurement jig; the second calibrated spectral data is obtained according to the conversion coefficient of the measurement jig and the model conversion coefficient.

Optionally, further including:

obtaining the normalized peak response curve corresponding to each channel of the measurement jig according to a spectral data normalization model;

wherein the spectral data normalization model is obtained by training based on key value pairs composed of multiple spectral measured values and spectral standard values.

Optionally, obtaining the conversion coefficient of the measurement jig based on the tristimulus value obtained by the spectrometer and the reading value obtained by the measurement jig includes:

measuring spectra of different light sources using a spectrometer and the measurement jig to obtain a plurality of standard tristimulus values and a plurality of measurement jig reading values;

calculating a conversion coefficient between the tristimulus value and the reading value of the measurement jig based on the plurality of standard tristimulus values and the plurality of measurement jig reading values, and using the conversion coefficient as the conversion coefficient of the measurement jig.

Optionally, the plurality of standard tristimulus values form a matrix N, the plurality of measurement jig reading values form a matrix M, and a conversion coefficient matrix $[K_{sensor}]$ between the tristimulus value and the reading value of the measurement jig is: $[K_{sensor}] = (M'M)^{-1}(M'N)$.

Optionally, the model conversion coefficient includes a first model coefficient, and the first model coefficient of each channel of the measurement jig is obtained by calculating based on actual measured spectrum obtained by the measurement jig, a peak response curve obtained in each channel and a reading value of each channel.

Optionally, the first model coefficient of each channel of the measurement jig is obtained by calculating based on the actual measured spectrum obtained by the measurement jig, a normalized peak response curve obtained by each channel and the reading value of each channel, which includes:

the first model coefficient $Coefficient1_i = (spd * Response\ Curve1_i)/Channel_i$,

wherein, spd is the actual measured spectrum, Response Curve1i is the normalized peak response curve obtained by each Channel, Channel is the reading value obtained by the measurement jig, i is a number of the Channel, and * represents inner product calculation.

Optionally, the model conversion coefficient includes a second model coefficient, and the second model coefficient of each channel of the measurement jig is obtained by calculating based on a preset virtual spectrum, a normalized peak response curve of each channel and y component of the tristimulus value.

Optionally, the second model coefficient of each channel of the measurement jig is obtained by calculating based on the preset virtual spectrum, the normalized peak response curve of each channel and the y component of the tristimulus value, and includes: the second model coefficient $Coefficient2i = (spd\_line * Response\ Curve1_i)/(spd\_line * ytri_i)$,

wherein spd_line is the preset virtual spectrum, Response Curve1$_i$ is the normalized peak response curve obtained by each channel, ytri$_i$ is the y component of the tristimulus value, i is a number of a channel, and * represents inner product calculation.

Optionally, the second spectral data measured by the measurement jig is sp2, and the second calibrated spectral data $sp2_{cal}$ is obtained according to the conversion coefficient of the measurement jig and the model conversion coefficient, and includes:

$$sp2_{cal} = sp2 * K_{sensor} * Coefficient2_i / Coefficient1_i.$$

Optionally, the second spectral data includes a color rendering index and/or a ratio of a circadian stimulus value to equivalent melanopic illuminance.

Optionally, the first spectral data includes at least one of illuminance, color coordinate and color temperature.

The technical solution of the present application further provides a spectral data calibration apparatus, including:

a first obtaining module, configured to obtain a conversion coefficient of a measurement jig based on a tristimulus value obtained by a spectrometer and a reading value obtained by the measurement jig;

a second obtaining module, configured to obtain a model conversion coefficient based on the reading value obtained by the measurement jig and a normalized peak response curve corresponding to each channel of the measurement jig;

a calibration module, configured to calibrate at least one of a first spectral data and a second spectral data measured by the measurement jig, and correspondingly obtaining at least one of a first calibrated spectral data and a second calibrated spectral data; wherein the first calibrated spectral data is obtained according to the conversion coefficient of the measurement jig; the second calibrated spectral data is obtained based on the conversion coefficient of the measurement jig and the model conversion coefficient.

The technical solution of the present application further provides an electronic device, including a memory, a processor and a computer program stored on the memory and executable on the processor, wherein the processor, when executing the program, implements steps of any of the above-mentioned spectral data calibration methods.

The technical solution of the present application further provides a non-transitory computer-readable storage medium, having a computer program stored thereon, wherein the computer program, when executed by a processor, implement steps of any of the above-mentioned spectral data calibration methods.

Compared with the existing technology, the technical solution of this application has the following beneficial effects:

in the spectral data calibration method and apparatus, electronic device and storage medium provided by the embodiment of the present application, the conversion coefficient of the measurement jig is obtained based on the tristimulus values obtained by the spectrometer and the reading values obtained by the measurement jig; the model conversion coefficient is obtained according to the reading values obtained by the measurement jig and the normalized peak response curves corresponding to the respective channels of the measurement jig; at least one of the first spectral data and the second spectral data measured by the measurement jig is calibrated, and at least one of the first calibrated spectral data and the second calibrated spectral data are correspondingly obtained; the first calibrated spectral data is obtained according to the conversion coefficient of the measurement jig; the second calibrated spectral data is obtained based on the conversion coefficient of the measurement jig and the model conversion coefficient, which can calibrate the spectral data obtained by an ordinary measurement jig, and can achieve accurate measurement of complex light source index parameters, reduce the measurement cost of the measurement jig, and the measurement jig of this application is suitable for large-scale applications in smart lighting.

BRIEF DESCRIPTION OF DRAWINGS

In order to more clearly illustrate the embodiments of the present application or the technical solutions in the prior art, the following will briefly introduce the drawings that need to be used in the description of the embodiments or the prior art. Obviously, the drawings in the following description are some of the embodiments of the present application. For those of ordinary skill in the art, other drawings can be obtained based on these drawings without creative efforts.

FIG. 1 is a first one of the schematic flow charts of a spectral data calibration method provided by an embodiment of the present application;
FIG. 2 is a second one of the schematic flow charts of a spectral data calibration method provided by an embodiment of the present application;
FIG. 3 is third one of the schematic flow charts of a spectral data calibration method provided by an embodiment of the present application;
FIG. 4 is a diagram comparing the peak response curves before and after normalization provided in the embodiments of this application;
FIG. 5 is a schematic structural diagram of a spectral data calibration apparatus provided by an embodiment of the present application;
FIG. 6 is a diagram of an application scenario of the measurement jig provided by the embodiment of the present application;
FIG. 7 is a schematic diagram of the principle for measuring spectral data with a measurement jig provided by an embodiment of the present application;
FIG. 8 is a schematic structural diagram of an electronic device provided by an embodiment of the present application.

Reference numbers:

501: first computing module; 502: second computing module; 503: calibration module.

DETAILED DESCRIPTION

In order to make the purpose, technical solutions and advantages of the embodiments of the present application clearer, the technical solutions in the embodiments of the present application will be clearly and completely described below in conjunction with the drawings in the embodiments of the present application. Obviously, the described embodiments are some of, not all of, the embodiments of this application. Based on the embodiments in the embodiments of this application, all other embodiments obtained by those of ordinary skill in the art without creative efforts fall within the scope of protection of the embodiments of this application.

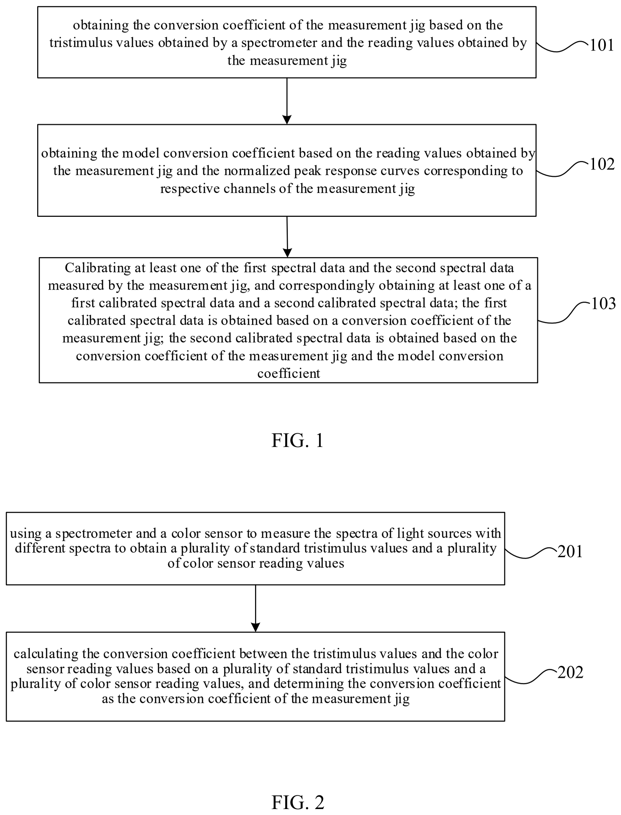

FIG. 1 is a flow chart of a spectral data calibration method provided by an embodiment of the present application. As shown in FIG. 1, the spectral data calibration method includes:

step 101: obtaining the conversion coefficient of the measurement jig based on the tristimulus values obtained by a spectrometer and the reading values obtained by the measurement jig;

In the embodiment of the present application, the measurement jig is, for example, a color sensor, and the wavelength range of the response curve of the color sensor is uniformly distributed in the range of visible light from 380 nm to 780 nm. The number of channels of the color sensor is, for example, 11. A total of 8 channels are provided in the wavelength range of visible light from 380nm to 780nm.

Step 102: obtaining the model conversion coefficient based on the reading values obtained by the measurement jig and the normalized peak response curves corresponding to respective channels of the measurement jig;

Step 103: Calibrating at least one of the first spectral data and the second spectral data measured by the measurement jig, and correspondingly obtaining at least one of a first calibrated spectral data and a second calibrated spectral data; the first calibrated spectral data is obtained based on a conversion coefficient of the measurement jig; the second calibrated spectral data is obtained based on the conversion coefficient of the measurement jig and the model conversion coefficient.

In the embodiment of the present application, the first spectral data includes but is not limited to illumination, color coordinates, color temperature, etc.; the second spectral data includes but is not limited to color rendering index, the ratio of circadian stimulus value to equivalent melanopic illuminance, etc.

When traditional light sensor chips obtain spectral data, there are differences between the respective light sensor chips, so the spectral data obtained by each sensor may be different, resulting in inaccurate calculated light source indicators. In addition, some complex light source indicator parameters (such as color rendering index) require spectrometer with complex measurement principles for the measurement, but such a spectrometer is expensive, and the measurement process is inconvenient, and the spectrometer is large, so it is not suitable for large-scale application in smart lighting.

In a spectral data calibration method provided by an embodiment of the present application, the conversion coefficient of the measurement jig is obtained based on the tristimulus values obtained by the spectrometer and the reading values obtained by the measurement jig; the model conversion coefficient is obtained according to the reading values obtained by the measurement jig and the normalized peak response curves corresponding to respective channels of the measurement jig; calibrating at least one of the first spectral data and the second spectral data measured by the measurement jig, and correspondingly obtaining at least one of a first calibrated spectral data and a second calibrated spectral data, the first calibrated spectral data is obtained according to the conversion coefficient of the measurement jig; the second calibrated spectral data is obtained based on the conversion coefficient of the measurement jig and the model conversion coefficient, the method can calibrate the spectral data obtained by the ordinary measurement jig, and can achieve accurate measurement of complex light source index parameters, reduce the measurement cost of the measurement jig, and, the measurement jig of this application is suitable for large-scale applications in smart lighting.

Based on any of the above embodiments, as shown in FIG. 2, obtaining the conversion coefficient of the measurement jig based on the tristimulus values obtained by the spectrometer and the reading values obtained by the measurement jig, including:

step 201: using a spectrometer and a color sensor to measure the spectra of light sources with different spectra to obtain a plurality of standard tristimulus values and a plurality of color sensor reading values;
In this embodiment of the present application, the number of light sources with different spectra is greater than or equal to the number of channels of the color sensor.

For example, light sources with different spectra are LED lamps with different spectra and different color temperatures. The lamp and the device containing color sensor are both placed in an integrating sphere. The LED small board is placed in the center of the integrating sphere, the device is placed in the inner section of the integrating sphere, and the main photosensitive direction of the sensor is directly facing the center of the integrating sphere. After the LED small board with different color temperatures is lit stably, the spectrum of the same LED small board is measured by a spectrometer and a sensor to obtain the tristimulus values {Xn, Yn, Zn} and sensor reading values {Tn1, Tn2, Tn3... Tni}, wherein n represents the $n^{th}$ lamp, and i represents the number of sensor channels.

Step 202: calculating the conversion coefficient between the tristimulus values and the color sensor reading values based on a plurality of standard tristimulus values and a plurality of color sensor reading values, and determining the conversion coefficient as the conversion coefficient of the measurement jig.

In the embodiment of the present application, the conversion coefficient between XYZ and the sensor reading values measured by the respective channels is calculated: $[K_{sensor}] = (M'M)^{-1}(M'N)$, wherein

$$M = \begin{pmatrix} T11 & T12 & T13 & ... & T1i \\ T21 & T22 & T23 & ... & T2i \\ T31 & T32 & T33 & ... & T3i \\ ... & ... & ... & ... & ... \\ Tn1 & Tn2 & Tn3 & ... & Tni \end{pmatrix}, N = \begin{pmatrix} X1 & Y1 & Z1 \\ X2 & Y2 & Z2 \\ X3 & Y3 & Z3 \\ ... & ... & ... \\ Xn & Yn & Zn \end{pmatrix},$$

testing the light source to be tested and calculate its tristimulus values:

$$\begin{pmatrix} X \\ Y \\ Z \end{pmatrix} = [K_{sensor}] \times (T1 \quad T2 \quad T3 \quad ... \quad Ti)。$$

By calculating the tristimulus values, the calibrated first spectral data, for example, spectral data such as illuminance, color coordinates, and color temperature, can be calculated. For example:

the formula of color coordinates (x, y) is: x = X/(X + Y + Z), y = Y/(X + Y + Z);
the formula of color temperature (correlated color temperature, CCT) is:

CCT = 437 * (x - 0.3320)/(0.1858 - y) ^3 + 3601 * (x - 0.3320)/(0.1858 - y) ^2 + 6861 * (x- 0.3320)/(0.1858 - y) + 5517;

illuminance = $K_{illuminance} \times Y$, $K_{illuminance}$ is a constant obtained after calibrating measurement taken at the same position of a standard illuminant.

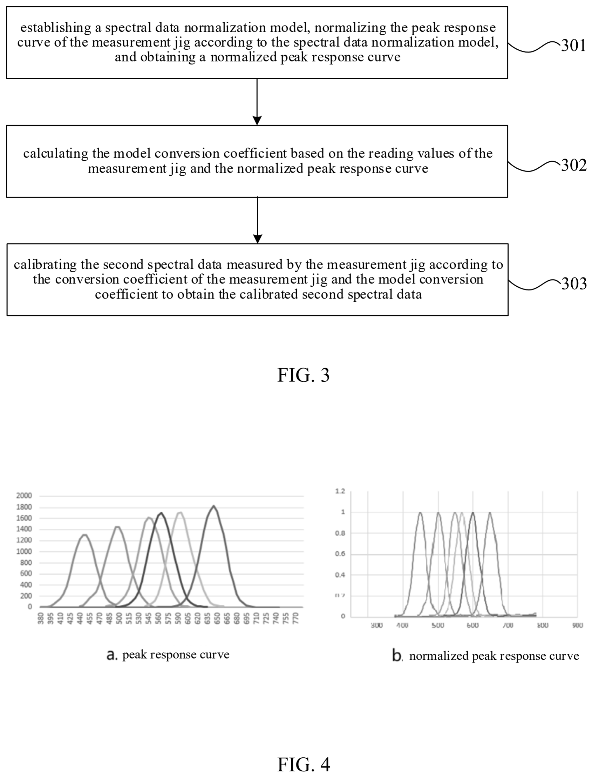

Based on any of the above embodiments, as shown in FIG. 3, the calculation method of the color rendering index includes:

step 301: establishing a spectral data normalization model, normalizing the peak response curve of the measurement jig according to the spectral data normalization model, and obtaining a normalized peak response curve;
In the embodiment of the present application, the spectral data normalization model is obtained by training based on key value pairs composed of multiple spectral measured values and spectral standard values; the spectral data normalization model is obtained based on big data technology after measuring about 3000 + spectra for training and construction, and is used to normalize the peak response curve measured by each measurement jig to a range, comparison of the peak response curves before and after normalization is shown in FIG. 4.

Step 302: calculating the model conversion coefficient based on the reading values of the measurement jig and the normalized peak response curve;
In the embodiment of the present application, the model conversion coefficient includes a first model coefficient, and the first model coefficient of each channel of the measurement jig is obtained by calculating based on the actual measured spectrum obtained by the measurement jig, the peak response curve obtained by each channel, and the reading value of each channel.

First model coefficient $Coefficient1_i$ = (spd * Response $Curve1_i$)/$Channel_i$, wherein, spd is the actual measured spectrum, Response Curve1 is the normalized peak response curve, Channel is the channel value read by the chip, i represents the number of the channel, and * represents the inner product calculation.

In the embodiment of the present application, the model conversion coefficient includes a second model coefficient, and the second model coefficient of each channel of the measurement jig is obtained by calculating based on a preset virtual spectrum, the normalized curve of the peak response of each channel, and the y component of the tristimulus values. Second model coefficient $Coefficient2_i$ = (spd_line * Response $Curve1_i$)/(spd_line * $ytri_i$); Wherein, spd_line is the virtual spectrum with all values set to 1 in the range from 380nm to 780nm, Response Curve1 is the normalized peak response curve, $ytri_i$ is the y component of the tristimulus values, i represents the number of the channel, and * represents the inner product calculation.

Step 303: calibrating the second spectral data measured by the measurement jig according to the conversion coefficient of the measurement jig and the model conversion coefficient to obtain the calibrated second spectral data.

In the embodiment of the present application, the second spectral data measured by the measurement jig is sp2, and the second calibrated spectral data $sp2_{cal}$ is obtained according to the conversion coefficient of the measurement jig and the model conversion coefficient, including: $sp2_{cal}$ = sp2 * $K_{sensor}$ * $Coefficient2_i$/$Coefficient1_i$.

In some embodiments, for the production personnel of the production line, the software on the PC is matched, and the production personnel use the software on the PC to send commands to the jig in sequence to turn on the light bars with color temperatures of 2700K, 4000K and 5700K, and then use the light detection device to read the spectral data and upload it to the PC software. After calculating a set of coefficients, the PC transmits the coefficients back to the device and writes them into the ROM flash for storage. When the user subsequently uses the APP to connect to the device for the first time, the APP will send a command to the device requesting the coefficients stored in the ROM flash, thereby achieving calibration of the spectral data read by the device.

The spectral data calibration method provided by the embodiments of the present application can not only improve the accuracy of spectral data measured by the measurement jig, but also can measure complex light source index parameters and reduce measurement costs.

The spectral data calibration apparatus will be described below. The spectral data calibration apparatus and the spectral data calibration method in the embodiments of the present application can be referred to each other correspondingly. Therefore, the explanation of relevant nouns will not be repeated.

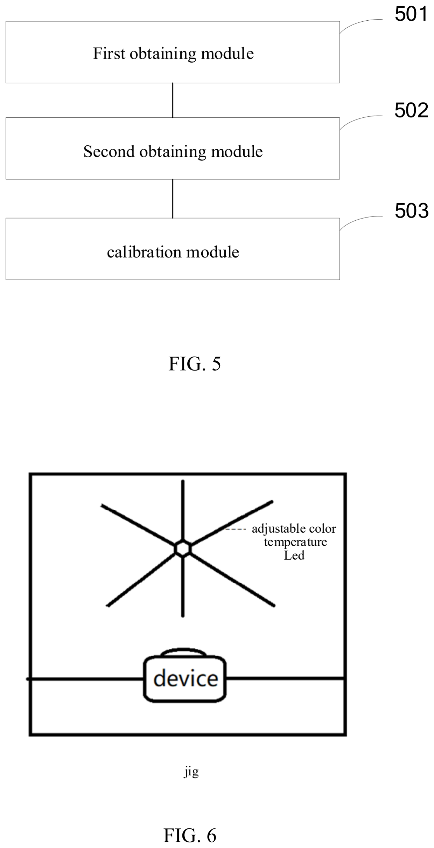

As shown in FIG. 5, the spectral data calibration apparatus includes:

a first obtaining module 501, configured to obtain the conversion coefficient of the measurement jig based on the tristimulus values obtained by the spectrometer and the reading values obtained by the measurement jig;

a second obtaining module 502, configured to obtain the model conversion coefficient based on the reading values obtained by the measurement jig and the normalized peak response curves corresponding to respective channels of the measurement jig;

a calibration module 503, configured to calibrate at least one of the first spectral data and the second spectral data measured by the measurement jig, and correspondingly obtain at least one of the first calibrated spectral data and the second calibrated spectral data; the first calibrated spectral data is obtained according to the conversion coefficient of the measurement jig; the second calibrated spectral data is obtained according to the conversion coefficient of the measurement jig and the model conversion coefficient.

In the spectral data calibration apparatus provided by the embodiment of the present application, the conversion coefficient of the measurement jig is obtained based on the tristimulus values obtained by the spectrometer and the reading values obtained by the measurement jig; the model conversion coefficient is obtained according to the reading values obtained by the measurement jig and the normalized peak response curves corresponding to the respective channels of the measurement jig; at least one of the first spectral data and the second spectral data measured by the measurement jig is calibrated, and at least one of the first calibrated spectral data and the second calibrated spectral data are correspondingly obtained; the first calibrated spectral data is obtained according to the conversion coefficient of the measurement jig; the second calibrated spectral data is obtained based on the conversion coefficient of the measurement jig and the model conversion coefficient, the spectral data calibration apparatus can calibrate the spectral data obtained by the ordinary measurement jig, and can achieve accurate measurement of complex light source index parameters, reduce the measurement cost of the measurement jig, and, the measurement jig of this application is suitable for large-scale applications in smart lighting.

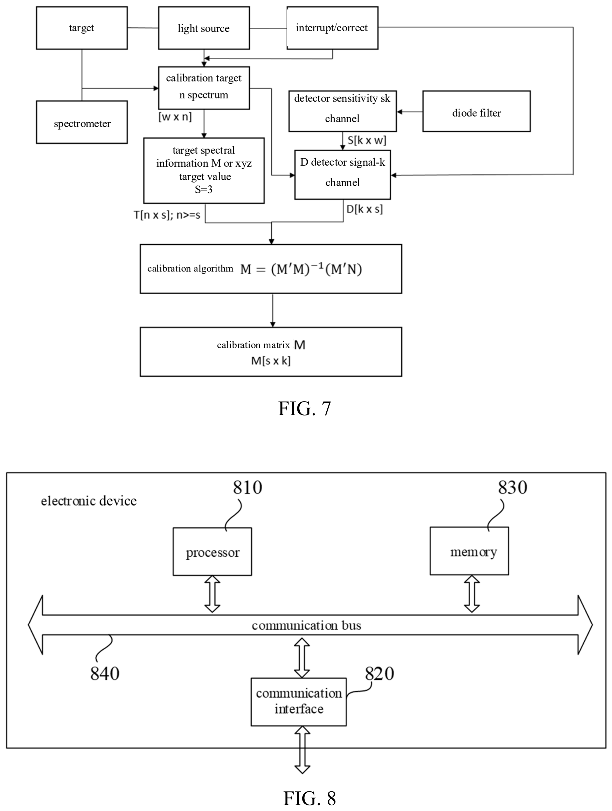

In some embodiments, as shown in FIG. 6, spectral data measurement is performed by a measurement jig, and the principle of the measurement jig measuring spectral data is shown in FIG. 7. The light source target is detected by a detector, and a detector detects the spectral data of the light source target, the spectral data is filtered through a diode filter, and the filtered spectral data is calibrated using the above calibration method.

FIG. 8 illustrates a schematic diagram of a physical structure of an electronic device. As shown in FIG. 8, the electronic device may include: a processor 810, a communication interface 820, a memory 830 and a communication bus 840, wherein, the processor 810, the communication interface 820, and the memory 830 communicate with each other through the communication bus 840. The processor 810 can call logic instructions in the memory 830 to perform the spectral data calibration method which includes: obtaining a conversion coefficient of a measurement jig based on tristimulus values obtained by a spectrometer and reading values obtained by the measurement jig; obtaining a model conversion coefficient according to the reading values obtained by the measurement jig and the normalized peak response curves corresponding to respective channels of the measurement jig; calibrating at least one of the first spectral data and the second spectral data measured by the measurement jig, correspondingly obtaining at least one of the first calibrated spectral data and the second calibrated spectral data, the first calibrated spectral data is obtained according to the conversion coefficient of the measurement jig; the second calibrated spectral data is obtained based on the conversion coefficient of the measurement jig and the model conversion coefficient.

In addition, the above-mentioned logical instructions in the memory 830 can be implemented in the form of software functional units and can be stored in a computer-readable storage medium when sold or used as an independent product. Based on this understanding, the essence of, or a part that contributes to the prior art of, or a part of the technical solution of the embodiments of the present application can be embodied in the form of a software product, and the computer software product is stored in a storage medium, several instructions are included to enable a computer apparatus (which may be a personal computer, a server, or a network device, etc.) to perform all or part of the steps in the methods of various embodiments of the present application. The aforementioned storage media includes: U disk, mobile hard disk, read-only memory (ROM), random access memory (RAM), magnetic disk or optical disk and other media that can store program codes.

On the other hand, embodiments of the present application further provide a non-transitory computer-readable storage medium on which a computer program is stored. the computer program, when executed by a processor, execute the spectral data calibration method provided the respective above-mentioned methods. The method includes: obtaining a conversion coefficient of a measurement jig based on tristimulus values obtained by a spectrometer and reading values obtained by the measurement jig; obtaining a model conversion coefficient according to the reading values obtained by the measurement jig and the normalized peak response curves corresponding to respective channels of the measurement jig; calibrating at least one of the first spectral data and the second spectral data measured by the measurement jig, correspondingly obtaining at least one of the first calibrated spectral data and the second calibrated spectral data, the first calibrated spectral data is obtained according to the conversion coefficient of the measurement jig; the second calibrated spectral data is obtained based on the conversion coefficient of the measurement jig and the model conversion coefficient.

The apparatus embodiments described above are only illustrative, in which units described as separate components may or may not be physically separated, and components shown as a unit may or may not be physical unit, that is, they may be located in one position, or may also be distributed in multiple network units. Some or all of the modules can be selected according to actual needs to achieve the purpose of the embodiments of the present application. Those of ordinary skill in the art can understand and implement it without creative effort.

Through the above description of the embodiments, those skilled in the art can clearly understand that each embodiment can be implemented by means of software plus the necessary general hardware platform, and of course can also be implemented by hardware. Based on this understanding, the essence of, or a part that contributes to the prior art of the embodiments of the present application can be embodied in the form of a software product, and the computer software product is stored in a computer-readable storage medium, such as ROM/RAM, magnetic disk, optical disk, or the like, which includes instructions for causing a computer apparatus (which may be a personal computer, server, network apparatus, etc.) to perform the methods of the respective embodiments or portions of embodiments.

Finally, it should be noted that: the above embodiments are only used to illustrate, but not to limit, the technical solutions of the embodiments of the present application; Although the embodiments of the present application have been described in detail with reference to the foregoing embodiments, those of ordinary skill in the art should understand that they can still modify the technical solutions described in the foregoing embodiments, or make equivalent replacements for some of the technical features; while these modifications or substitutions do not cause the essence of the corresponding technical solutions to depart from the scope of the technical solutions of the embodiments of the present application.

**Claims**

1. A spectral data calibration method, comprising:

    obtaining a conversion coefficient of a measurement jig based on a tristimulus value obtained by a spectrometer and a reading value obtained by the measurement jig;
    obtaining a model conversion coefficient based on the reading value obtained by the measurement jig and a normalized peak response curve corresponding to each channel of the measurement jig;
    calibrating at least one of a first spectral data and a second spectral data measured by the measurement jig, and correspondingly obtaining at least one of a first calibrated spectral data and a second calibrated spectral data; wherein the first calibrated spectral data is obtained according to the conversion coefficient of the measurement jig; the second calibrated spectral data is obtained according to the conversion coefficient of the measurement jig and the model conversion coefficient.

2. The spectral data calibration method according to claim 1, further comprising:

    obtaining the normalized peak response curve corresponding to each channel of the measurement jig according to a spectral data normalization model;
    wherein the spectral data normalization model is obtained by training based on key value pairs composed of multiple spectral measured values and spectral standard values.

3. The spectral data calibration method according to claim 1, wherein obtaining the conversion coefficient of the measurement jig based on the tristimulus value obtained by the spectrometer and the reading value obtained by the measurement jig comprises:

    measuring spectra of different light sources using a spectrometer and the measurement jig to obtain a plurality of standard tristimulus values and a plurality of measurement jig reading values;
    calculating a conversion coefficient between the tristimulus value and the reading value of the measurement jig based on the plurality of standard tristimulus values and the plurality of measurement jig reading values, and using the conversion coefficient as the conversion coefficient of the measurement jig.

4. The spectral data calibration method according to claim 3, wherein the plurality of standard tristimulus values form a matrix N, the plurality of measurement jig reading values form a matrix M, and a conversion coefficient matrix $[K_{sensor}]$ between the tristimulus value and the reading value of the measurement jig is: $[K_{sensor}] = (M'M)^{-1}(M'N)$.

5. The spectral data calibration method according to claim 1, wherein the model conversion coefficient comprises a first model coefficient, and the first model coefficient of each channel of the measurement jig is obtained by calculating based on actual measured spectrum obtained by the measurement jig, a peak response curve obtained in each channel and a reading value of each channel.

6. The spectral data calibration method according to claim 5, wherein the first model coefficient of each channel of the measurement jig is obtained by calculating based on the actual measured spectrum obtained by the measurement jig, a normalized peak response curve obtained by each channel and the reading value of each channel, which comprises:

the first model coefficient $Coefficient1_i = (spd * Response\ Curve1_i)/Channel_i$,
wherein, spd is the actual measured spectrum, Response Curve1i is the normalized peak response curve obtained by each Channel, Channel is the reading value obtained by the measurement jig, i is a number of the Channel, and * represents inner product calculation.

7. The spectral data calibration method according to claim 1, wherein the model conversion coefficient comprises a second model coefficient, and the second model coefficient of each channel of the measurement jig is obtained by calculating based on a preset virtual spectrum, a normalized peak response curve of each channel and y component of the tristimulus value.

8. The spectral data calibration method according to claim 7, wherein the second model coefficient of each channel of the measurement jig is obtained by calculating based on the preset virtual spectrum, the normalized peak response curve of each channel and the y component of the tristimulus value, and comprises: the second model coefficient $Coefficient2i = (spd\_line * Response\ Curve1_i)/(spd\_line * ytri_i)$, wherein spd_line is the preset virtual spectrum, Response Curve1$_i$ is the normalized peak response curve obtained by each channel, ytri$_i$ is the y component of the tristimulus value, i is a number of a channel, and * represents inner product calculation.

9. The spectral data calibration method according to claim 8, wherein the second spectral data measured by the measurement jig is sp2, and the second calibrated spectral data sp2$_{cal}$ is obtained according to the conversion coefficient of the measurement jig and the model conversion coefficient, and comprises:

$$sp2_{cal}=sp2*K_{sensor}*Coefficient2_i/Coefficient1_i.$$

10. The spectral data calibration method according to claim 1 or 9, wherein the second spectral data comprises a color rendering index and/or a ratio of a circadian stimulus value to equivalent melanopic illuminance.

11. The spectral data calibration method according to claim 1, wherein the first spectral data comprises at least one of illuminance, color coordinate and color temperature.

12. A spectral data calibration apparatus, comprising:

a first obtaining module, configured to obtain a conversion coefficient of a measurement jig based on a tristimulus value obtained by a spectrometer and a reading value obtained by the measurement jig;
a second obtaining module, configured to obtain a model conversion coefficient based on the reading value obtained by the measurement jig and a normalized peak response curve corresponding to each channel of the measurement jig;
a calibration module, configured to calibrate at least one of a first spectral data and a second spectral data measured by the measurement jig, and correspondingly obtaining at least one of a first calibrated spectral data and a second calibrated spectral data; wherein the first calibrated spectral data is obtained according to the conversion coefficient of the measurement jig; the second calibrated spectral data is obtained based on the conversion coefficient of the measurement jig and the model conversion coefficient.

13. An electronic device, comprising a memory, a processor and a computer program stored on the memory and executable on the processor, wherein the processor, when executing the program, implements steps of the spectral data calibration method according to any one of claims 1 to 11.

14. A non-transitory computer-readable storage medium, having a computer program stored thereon, wherein the computer program, when executed by a processor, implement steps of the spectral data calibration method according to any one of claims 1 to 11.

obtaining the conversion coefficient of the measurement jig based on the tristimulus values obtained by a spectrometer and the reading values obtained by the measurement jig — 101

obtaining the model conversion coefficient based on the reading values obtained by the measurement jig and the normalized peak response curves corresponding to respective channels of the measurement jig — 102

Calibrating at least one of the first spectral data and the second spectral data measured by the measurement jig, and correspondingly obtaining at least one of a first calibrated spectral data and a second calibrated spectral data; the first calibrated spectral data is obtained based on a conversion coefficient of the measurement jig; the second calibrated spectral data is obtained based on the conversion coefficient of the measurement jig and the model conversion coefficient — 103

FIG. 1

using a spectrometer and a color sensor to measure the spectra of light sources with different spectra to obtain a plurality of standard tristimulus values and a plurality of color sensor reading values — 201

calculating the conversion coefficient between the tristimulus values and the color sensor reading values based on a plurality of standard tristimulus values and a plurality of color sensor reading values, and determining the conversion coefficient as the conversion coefficient of the measurement jig — 202

FIG. 2

establishing a spectral data normalization model, normalizing the peak response curve of the measurement jig according to the spectral data normalization model, and obtaining a normalized peak response curve ⌐301

calculating the model conversion coefficient based on the reading values of the measurement jig and the normalized peak response curve ⌐302

calibrating the second spectral data measured by the measurement jig according to the conversion coefficient of the measurement jig and the model conversion coefficient to obtain the calibrated second spectral data ⌐303

FIG. 3

a. peak response curve

b. normalized peak response curve

FIG. 4

First obtaining module — 501

Second obtaining module — 502

calibration module — 503

FIG. 5

adjustable color
temperature
Led

device

jig

FIG. 6

```
 ┌──────────┐      ┌──────────────┐      ┌──────────────┐
 │  target  │──────│ light source │──────│interrupt/correct│
 └──────────┘      └──────────────┘      └──────────────┘
```

calibration target
n spectrum

[w x n]

spectrometer

detector sensitivity sk
channel

diode filter

S[k x w]

target spectral
information M or xyz
target value
S=3

D detector signal-k
channel

T[n x s]; n>=s

D[k x s]

calibration algorithm  $M = (M'M)^{-1}(M'N)$

calibration matrix M
M[s x k]

FIG. 7

electronic device

810

processor

830

memory

communication bus

840

820

communication
interface

FIG. 8

## INTERNATIONAL SEARCH REPORT

| International application No. |
| :-- |
| **PCT/CN2023/143276** |

| A. | CLASSIFICATION OF SUBJECT MATTER |
| :-- | :-- |
| | G01N 21/27(2006.01)i;  G01M11/02(2006.01)i |

According to International Patent Classification (IPC) or to both national classification and IPC

| B. | FIELDS SEARCHED |
| :-- | :-- |

Minimum documentation searched (classification system followed by classification symbols)

IPC:G01N G01M

Documentation searched other than minimum documentation to the extent that such documents are included in the fields searched

Electronic data base consulted during the international search (name of data base and, where practicable, search terms used)

CNTXT; CNKI; CJFD; ENTXT; ENTXTC; WPABS; WPABSC: 三刺激, 三刺激值, 刺激值, 变换, 转化, 转换, 矩阵, 系数, 标识, 标示, 标准化, 参数, 传感器, 峰值, 光谱, 光源, 归一, 模型, 色温, 色坐标, 显色指数, transformat+, matrix, coefficients, calibration, spectra, color rendering index, normalization

| C. | DOCUMENTS CONSIDERED TO BE RELEVANT |
| :-- | :-- |

| Category* | Citation of document, with indication, where appropriate, of the relevant passages | Relevant to claim No. |
| :-- | :-- | :-- |
| PX | CN 116256319 A (SUZHOU OPPLE LIGHTING CO., LTD. et al.) 13 June 2023 (2023-06-13)<br>claims 1-14 | 1-14 |
| A | CN 109618479 A (OPPLE LIGHTING CO., LTD.) 12 April 2019 (2019-04-12)<br>description, paragraphs [0003]-[0133], and figure 1 | 1-14 |
| A | CN 112161708 A (HUNAN FURUI PRINTING CO., LTD.) 01 January 2021 (2021-01-01)<br>entire document | 1-14 |
| A | CN 105675148 A (WENZHOU JIAYI INSTRUMENTS CO., LTD.) 15 June 2016 (2016-06-15)<br>entire document | 1-14 |
| A | CN 106872146 A (CHINA INSTITUTE OF MEASUREMENT AND TESTING TECHNOLOGY) 20 June 2017 (2017-06-20)<br>entire document | 1-14 |
| A | US 2020132549 A1 (CRESTRON ELECTRONICS, INC.) 30 April 2020 (2020-04-30)<br>entire document | 1-14 |

☐ Further documents are listed in the continuation of Box C.  ☑ See patent family annex.

| * | Special categories of cited documents: |
| :-- | :-- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| :-- | :-- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| :-- | :-- |
| **07 April 2024** | **15 April 2024** |

| Name and mailing address of the ISA/CN | Authorized officer |
| :-- | :-- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| PCT/CN2023/143276 |

| Patent document cited in search report | | | Publication date (day/month/year) | Patent family member(s) | | | Publication date (day/month/year) |
|---|---|---|---|---|---|---|---|
| CN | 116256319 | A | 13 June 2023 | None | | | |
| CN | 109618479 | A | 12 April 2019 | None | | | |
| CN | 112161708 | A | 01 January 2021 | None | | | |
| CN | 105675148 | A | 15 June 2016 | None | | | |
| CN | 106872146 | A | 20 June 2017 | None | | | |
| US | 2020132549 | A1 | 30 April 2020 | US | 11002605 | B2 | 11 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022117144813